# EUROPEAN PATENT APPLICATION

(11) **EP 4 620 770 A1**
(43) Date of publication of application: **24.09.2025**
(21) Application number: 25164512.3
(22) Date of filing: 18.03.2025
(51) Int. Cl.: B61H 5/00, F16D 65/12, F16D 65/847, F16D 65/02

(54) **RAILWAY WHEEL BRAKE DISC**

(30) Priority: 21.03.2024 IT 202400006337
(71) Applicant: Transportation IP Holdings, LLC, Norwalk, CT 06851 (US)
(72) Inventor: CREMONA, Marco, 26010 CAMISANO (CR) (IT); DEZIO, William, 26010 CAMISANO (CR) (IT); FUSAR BASSINI, Filippo, 26010 CAMISANO (CR) (IT); RONCHI, Nino, 26010 CAMISANO (CR) (IT)
(74) Representative: Studio Torta S.p.A.

(57) **Abstract**

A railway brake disc may include at least one brake disc segment. This segment can form at least part of an annular body that circumferentially encircles a center opening. The segment can be mounted to a railway wheel to be engaged by a brake caliper pad to slow or stop rotation of the railway wheel. The segment can include rows of protrusions located at different radial distances from a radial center of the at least one brake disc segment. The protrusions can include an outer row of circular columns located along an outer radial distance of the at least one brake disc segment, an inner row of columns located along an inner radial distance of the at least one brake disc segment, and at least one intermediate row of columns radially located between the inner row of the columns and the outer row of the circular columns.

## Description

### CROSS-REFERENCE TO RELATED APPLICATIONS

This patent application claims priority from Italian patent application no. 102024000006337 filed on March 21, 2024, the entire disclosure of which is incorporated herein by reference.

### BACKGROUND

### Technical Field.

The subject matter described herein relates to brake disc assemblies for railway wheels.

### Discussion of Art.

Railway vehicles such as locomotives, rail cars, passenger cars, and the like, can use wheel-mounted or axle-mounted brake discs. These brake discs receive a brake force from a brake caliper assembly to slow or stop rotation of the wheels and movement of the vehicle. One issue with these brake discs can be management of heat that is generated by friction between the brake discs and a brake pad. While several different designs attempt to direct and channel cooling air through the brake discs to cool the brake discs, the known designs may suffer from overly tortious pathways for the cooling air to flow. This can result in ineffective airflow that worsens cooling performance and may generate some power loss thereby reducing the efficiency of the vehicle. Additionally, some of these designs can result in unacceptable vibrations of the brake discs at some rotational speeds. These vibrations can increase the wear and tear of the brakes, thereby reducing the useful lives of the brake discs, and may generate a reduction in overall comfort of the vehicle.

It may be desirable to have a disc and method that differs from those that are currently available.

### BRIEF DESCRIPTION

A railway brake disc may include at least one brake disc segment. This segment can form at least part of an annular body that circumferentially encircles a center opening. For example, two or more of these segments (or one or more additional, different segments) can be combined to form the brake disc. The individual segment may not completely encircle the center opening, but may define or subtend only a portion of the circumference around the center opening. The segment can be mounted to a railway wheel and be engaged by a brake caliper pad to slow or stop rotation of the railway wheel. The segment can include rows of protrusions located at different radial distances from a radial center of the at least one brake disc segment. The protrusions can include an outer row of circular columns located along an outer radial distance of the at least one brake disc segment, an inner row of columns (which may be directional columns) located along an inner radial distance of the at least one brake disc segment, and at least one intermediate row of columns (which may be fin columns) radially located between the inner row of the columns and the outer row of the circular columns.

A railway brake disc can include an annular body that circumferentially encircles a center opening. The annular body can be mounted to a railway wheel. The annular body can be engaged by a brake caliper pad to slow or stop rotation of the railway wheel. The annular body can include rows of protrusions located at different radial distances from a radial center of the annular body. The protrusions of the annular body can include an outer row of circular pillars located along an outer radial distance of the annular body, an inner row of columns (which may be directional columns) located along an inner radial distance of the annular body, and at least one intermediate row of columns (which may be fin columns) radially located between the inner row of columns and the outer row of the circular pillars.

A method for creating a railway brake disc can include forming at least one arcuate brake disc segment. This segment can be combined with one or more additional segments to form at least part of an annular body that circumferentially encircles a center opening and that can be mounted to a railway wheel to be engaged by a brake caliper pad to slow or stop rotation of the railway wheel. The segment can be formed to include rows of protrusions located at different radial distances from a radial center of the at least one arcuate brake disc segment. The protrusions can be formed to include an outer row of circular pillars located along an outer radial distance of the at least one arcuate brake disc segment, an inner row of columns (which may be directional columns) located along an inner radial distance of the at least one arcuate brake disc segment, and at least one intermediate row of columns (which may be fin columns) radially located between the inner row of columns and the outer row of the circular pillars.

### BRIEF DESCRIPTION OF THE DRAWINGS

The subject matter may be understood from reading the following description of non-limiting embodiments, with reference to the attached drawings, wherein below:
Figure 1 illustrates one example of a railway brake disc ;
Figure 2 illustrates another view of a portion of the disc shown in Figure 1; and
Figure 3 illustrates a perspective view of a portion of the disc .

### DETAILED DESCRIPTION

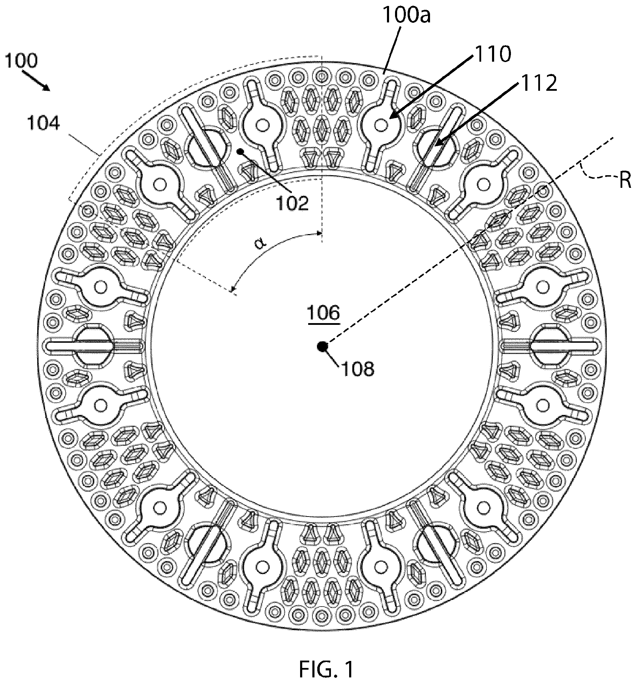

Figure 1 illustrates one example of a railway brake disc100. The brake disc shown in Figure 1 may be combined with another brake disc to form a brake disc assembly or disc brake assembly for a railway wheel of a railway vehicle. For example, a side or surface 102 of the brake disc shown in Figure 1 may face the same side or surface of another brake disc to form a brake disc assembly. The illustrated side or surface can engage or be coupled with the wheel rim surface and another brake disc. These two discs can be coupled with each other and to the wheel. A caliper presses against the discs to transmit the braking force to the wheel and slow or stop rotation of the wheel and movement of the vehicle. The side or surface 102 of the disc shown in Figure 1 can be referred to as an internal side or surface, while the opposite side or surface can be referred to as an external side or surface.

The disc may be a unitary body. For example, the disc may be cast, printed, or the like, as a single, continuous, and/or homogeneous body with no seams, gaps, or separations between any parts or components of the body. Optionally, the disc may be a multi-part body. For example, the disc may be formed from two or more arcuate brake disc segments 104. These disc segments can be arcuate in shape, and may be connected with each other to form the disc shown in Figure 1. Broken lines are shown in Figure 1 to illustrate one example of the edges of a disc segment. Alternatively, the broken lines or edges of the disc segment may be in other locations. The angular extension of each segment can be identified by the formula of three-hundred sixty degrees divided by the number of same-sized segments (with or without some gap between the segments). For example, in a disc formed from six segments, each segment would have an angular extension of sixty degrees or approximately sixty degrees. In another example, two or more of the segments may have different angular extensions.

The disc (whether a unitary body or a multi-segment body) may be or form an annular body that circumferentially extends around or encircles a center opening 106. An axle of the vehicle may extend through this opening. The body (whether a unitary body or arcuate segment) includes several protrusions. These protrusions may be referred to as cooling elements or bodies as the protrusions draw or conduct heat from operation of the disc from the body to cooling air that is directed or channeled between and around the protrusions. This can help cool the disc .

The disc may include coupling protrusions or coupling elements 110, 112. These coupling protrusions or elements are used to couple the segments with each other and to the wheel. For example, fasteners or pins may extend through the holes in the coupling protrusions or elements 110 to couple and align the segments to the wheel. The coupling protrusions or elements may be shaped differently than what is shown in Figure. For example, the coupling protrusions or elements 110 may not include the elongated bodies extending away from the hole in opposite directions. Optionally, the coupling protrusions or elements 112 may not be provided. If the elongated bodies of the coupling protrusions 110 and/or the coupling protrusions 112 are not included, the space occupied by the elongated bodies and/or coupling protrusions 112 may include more of the protrusions in the different rows. The coupling protrusions may be known in the art, and not all embodiments of the inventive subject matter described herein is limited to the exact coupling protrusions shown in the Figures.

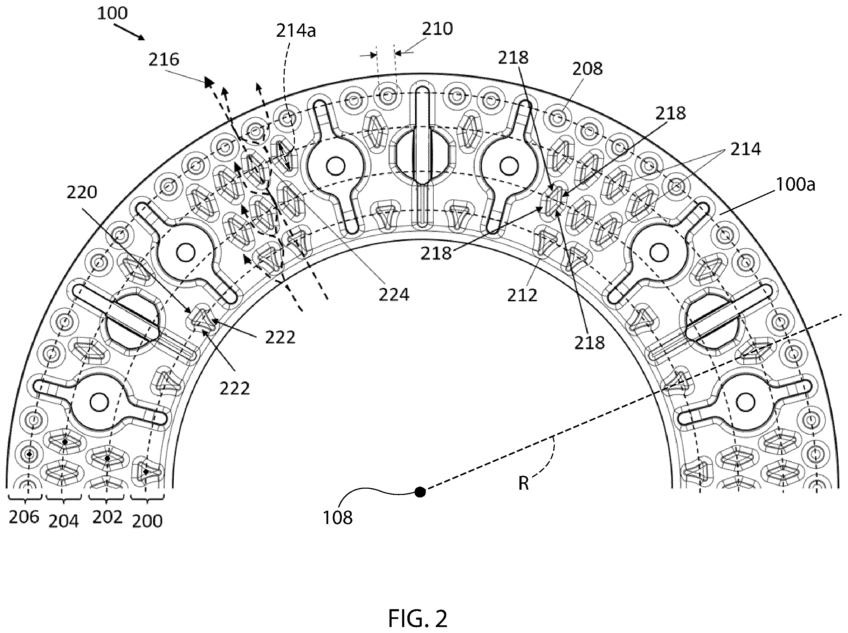

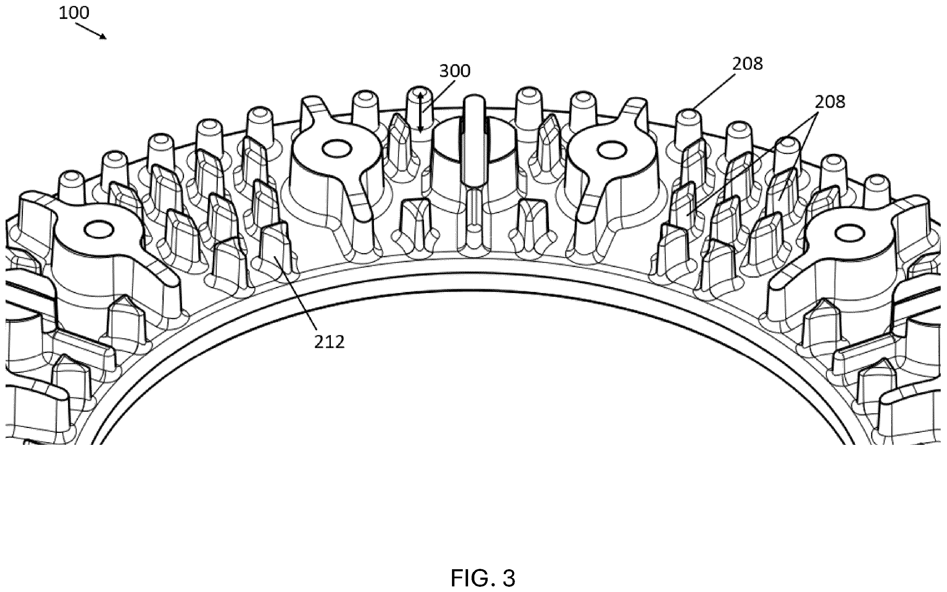

With continued reference to the disc shown in Figure 1, Figure 2 illustrates another view of a portion of the disc shown in Figure 1. Figure 3 illustrates a perspective view of a portion of the disc . The unitary body or arcuate segment of the disc can include several arcuate rows 200, 202, 204, 206 of the protrusions. A row can be formed by all the protrusions having their two dimensional geometrical centers of gravity placed on the same circumference. Each row may be formed by at least two of the protrusions. Each of these rows may be located at a different radial distance from a radial center 108 of the disc or arcuate segment. For example, each of these rows can be located within a circular path that extends around or encircles the opening of the disc , with each path located at a different distance from the radial center. The rows may not cross each other, but may be coaxial with the row 200 being closest to the radial center (and being the smallest radial distance from the radial center of the rows), the row 202 being second closest to the radial center (and being the second smallest radial distance from the radial center of the rows), the row 204 being the next to the radial center (and being the next smallest radial distance from the radial center of the rows), and so on. While the illustrated example includes four rows, optionally the disc may include fewer rows or more than four rows. Alternatively two or more of the rows may cross each other. For example, the protrusions in one row may not be arranged on a circular path, but in a path that extends from one radial distance from the radial center to another path that extends a larger (or shorter) radial distance from the radial center. Stated differently, in one embodiment, the rows may be non-intersecting, coaxial circular paths. In another embodiment, two or more of the rows may be intersecting, non-coaxial circular paths. In another embodiment two or more of the rows may be intersecting, coaxial noncircular paths.

The row 206 may be referred to as an outer row as this row is at the longest radial distance from the radial center of the disc (of the rows). This distance can be referred to as the outer radial distance of the rows in the body or disc segment. The outer row may include circular pillars 208 as the protrusions in that row. These circular pillars can be columns that have the same size or a common size. For example, the pillars may have the same based diameter 210, height 300, and/or aspect ratio (within manufacturing tolerances, such as within 1 % of each other). The base diameter may be the diameter of the pillar where the pillar begins to protrude from the disc. The circular pillars may be equally spaced apart. Optionally, the distances between the circular pillars may be different for different pairs of the circular pillars. Due to various manufacturing processes, the circular pillars may have draft angles along axial directions of the pillars and/or fillet radii on edges of the pillars where the pillars intersect the surface from which the pillars project. The upper tops or ends of the circular pillars may be curved with radii so that these pillars are rounded.

The row 200 may be referred to as an inner row as this row is at the shortest radial distance from the radial center of the disc (of the rows). This distance can be referred to as an inner radial distance of the rows in the body or disc segment. The inner row may include directional columns 212 as the protrusions in that row. These directional columns can have the same size or a common size. For example, the directional columns may have the same height, width, and/or aspect ratio (within manufacturing tolerances, such as within 1 % of each other). Optionally, the inner row may include or be formed from the circular pillars as the protrusions. The pillars may be columns having the same or similar sizes. The pillars may have the same diameter, height, and/or aspect ratio within manufacturing tolerances, as described above.

The rows 202, 204 may be referred to as intermediate rows as these rows are at radial distances that are between the inner and outer radial distances of all rows. The row 202 can be referred to as a radially inner intermediate row and the row 204 can be referred to as a radially outer intermediate row as the row 202 is radially located between the inner row of the columns and the radially outer intermediate row of the columns and the row 204 is radially located between the radially inner intermediate row and the outer row of the circular pillars. While two intermediate rows are shown, the disc or segment may include a single intermediate row or more than two intermediate rows. The intermediate row(s) may include columns 214 as the protrusions in that row. These columns can be elongated and can be referred to as fin columns. Alternatively, the columns in the intermediate row(s) may have another shape and/or size. The columns in the intermediate row can be the same size and/or a common size. For example, the fin columns may have the same height, width, and/or aspect ratio (within manufacturing tolerances, such as within 1% of each other). With multiple intermediate rows, all the columns can be the same size, or the columns within each intermediate row may be the same size with each intermediate row having columns that are differently sized from at least one other intermediate row.

The fin columns may have rhombus shapes or diamond shapes. Optionally, the fin columns may have another shape, but are elongated along radial directions. For example, each fin column may be elongated along a radial direction 216. The radial directions along which the fin columns are elongated may intersect or extend from the same radial center. Each fin column may be largest along the radial direction (e.g., longer in the radial direction than in a circumferential direction that encircles the radial center, longer than the height of each fin column, etc.). Alternatively, each fin column may have a greater height than the fin column is elongated in a radial direction. In another example, each of these columns can be elongated in the circumferential direction instead of the radial direction.

The radial direction of the columns in the radial outer intermediate row 204 can extend between and/or not intersect the columns in the outer row 206 that are adjacent to each other, nearest each other, or neighbor each other (as shown in Figure 2). Optionally, the radial directions along with the columns in the radial inner intermediate row 202 are elongated may pass through or intersect different ones of the columns in the outer row 206, as shown in Figure 2. These same radial directions along which the columns in the radial inner intermediate row 202 are elongated may extend between and/or not intersect the columns in the inner row 200 that are adjacent to each other, nearest each other, or neighbor each other (as shown in Figure 2). Optionally, the radial direction along which the columns in the radial outer intermediate row 204 are elongated may pass through or intersect different ones of the columns in the inner row 200 as shown in Figure 2.

Each fin column may have a shape that is formed by straight boundary lines 218, as shown in Figure 2. These boundary lines may be straight such that no side of the fin column is convex, concave, curved, or undulated. The straight boundary lines or edges of the fin columns have been found by the inventors to interfere less with flow of cooling air between the columns or protrusions (relative to curved boundary lines or edges). Due to manufacturing processes, intersections of the edges forming the rhombus or diamond shape may have a fillet radius and/or a draft angle.

The elongation of the fin columns in the radial directions can reduce interference of the flow of cooling air relative to fin columns that are elongated or larger in other directions. For example, fin columns that are wider along circumferential directions or circumferences of the disc may interfere with and slow the flow of cooling air relative to the radially elongated fin columns.

The columns in the different intermediate rows may be circumferentially offset from each other. For example, in the case of two intermediate rows, the radial directions in which the columns in the radially inner intermediate row are elongated may extend or be located between the radial directions in which the columns in the radially outer row are elongated. The columns in the radially outer intermediate row can be elongated along second radial directions that extend between the circular pillars that are adjacent to each other in different pairs of the circular pillars.

In the illustrated example, the fin columns in the intermediate rows are all the same size or dimensions (e.g., within manufacturing tolerances). Alternatively, two or more of the intermediate rows may have fin columns having one or more dimensions that are larger or smaller than the fin columns in at least one other intermediate row. For example, the columns in one intermediate row may be longer in the radial directions than the columns in another intermediate row, the columns in one intermediate row may be wider in the circumferential directions than the fin columns in another intermediate row, the columns in one intermediate row may be taller than the columns in another intermediate row, or the like. The differently sized fin columns can be selected to control the flow of cooling air between the fin columns. For example, some disc brake assemblies may have differently sized fin columns due to the ambient air being cooler than for other disc brake assemblies.

In the illustrated example, each of the inner row columns may be directional with a triangular shape, as shown in Figures 1 through 3. Optionally, each directional column may have a rhombus or diamond shape. In another example, the inner row may include a combination of triangular shaped columns and rhombus shaped columns. In one example, the protrusions in the inner row may have circular shapes. The shape of a column, pillar, or protrusion as described herein can be the shape formed by the column, pillar, or protrusion in a two-dimensional plane that is parallel to the internal side or surface of the disc . Stated differently, the shape of a column, pillar, or protrusion as described herein can be the shape of the column, pillar, or protrusion in this two-dimensional plane.

With respect to the triangular shaped directional columns, each of the columns may have a base 220 forming one side or boundary of the column, and two legs 222 forming the other two sides or boundaries of the column. The base of each directional column may be radially outside of the legs of the same column. For example, the bases of the directional columns may be farther from the radial center than the legs. This can result from the triangle shape of the directional column pointing inward toward the radial center. This orientation of the directional columns can help spread incoming cooling air into flow channels between the fin columns in the intermediate row(s).

In operation, cooling air may flow between the disc and the rim of the railway wheel. The cooling air may first reach the columns or protrusions in the inner row. In the illustrated example, the orientation and/or shape of the directional columns can split and spread this incoming air into flow channels 224 that extend between the fin columns. The fin columns can direct the air through these flow channels to the circular columns. The air can then flow out of the disc between the circular columns. The inventors of the subject matter described herein have found that the inner columns, at least one row of the fin columns, and/or the outer row of circular pillars unexpectedly cool the disc faster, while also unexpectedly reducing vibration of the disc while reducing power losses, when compared with disc assemblies having more rows of protrusions, protrusions that are differently shaped (such as helically shaped or curved such that the protrusions cross multiple radial directions), or the like. The columns can help split and spread the incoming cooling air between the fin columns in the one or more rows (thereby reducing power losses of the cooling air). This air can be split and spread by the columns without slowing movement of the air relative to columns having other shapes in the intermediate row(s). The fin columns being elongated along the radial directions that the air flows between the protrusions can provide increased surface area to the air for cooling (relative to columns that are not elongated in the radial directions), while reducing interference with the air flow (relative to columns that are wider in directions that are transverse to the radial directions). The multiple rows of columns also has been found to decrease the interference to air flow and the power losses. The inventors also discovered that the equally sized circular pillars located radially outside of all other columns or cooling protrusions appear to significantly reduce vibration of the brake disc relative to pillars that are not equally sized, that are not circular (in a cross-sectional plane that is parallel to the internal side or surface of the disc ), and/or that have additional columns or protrusions radially outside of the circular pillars.

In one example, a method for creating a railway brake disc is provided. This method can include a step of forming the annular body or at least two of the arcuate brake disc segments described herein. These segments can form at least part of the annular body that circumferentially encircles the center opening. The brake disc segment is formed to include the rows of the protrusions that are located at different radial distances from the radial center of the brake disc segment(s). The protrusions are formed to include at least the outer row of the circular pillars, the inner row of the columns, and at least one of the intermediate rows of the fin columns.

While one or more embodiments are described in connection with a rail vehicle system, not all embodiments are limited to rail vehicle systems. Unless expressly disclaimed or stated otherwise, the subject matter described herein extends to other types of vehicle systems, such as automobiles, trucks (with or without trailers), buses, marine vessels, aircraft, mining vehicles, agricultural vehicles, or other off-highway vehicles. The vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy).

A railway brake disc may include at least one brake disc segment. This segment can form at least part of an annular body that circumferentially encircles a center opening. The segment can be mounted to a railway wheel and be engaged by a brake caliper pad to slow or stop rotation of the railway wheel.. The segment can include rows of protrusions located at different radial distances from a radial center of the at least one brake disc segment. The protrusions can include an outer row of circular columns located along an outer radial distance of the at least one brake disc segment, an inner row of columns located along an inner radial distance of the at least one brake disc segment, and at least one intermediate row of columns radially located between the inner row of the columns and the outer row of the circular columns.

The circular columns in the outer row can all have a common size. For example, the circular columns can have a common base diameter, a common height, or a common aspect ratio as the common size.

The columns in the intermediate rows can all have a common size. The fin columns can be rhombus-shaped. There may be multiple intermediate rows and include at least a radially inner intermediate row and a radially outer intermediate row. The radially inner intermediate row can be radially located between the inner row columns and the radially outer intermediate row of the fin columns. The radially outer intermediate row radially can be located between the radially inner intermediate row and the outer row of the circular columns. The fin columns in the radially inner intermediate row can be elongated along first radial directions that extend through at least some of the circular columns in the outer row. The fin columns in the radially outer intermediate row can be elongated along second radial directions that extend between the circular columns that are adjacent to each other in different pairs of the circular columns. Each of the fin columns can include four boundary lines that each extends along a straight line. Pairs of these boundary lines can intersect each other.

The segment can include two or more of the brake disc segments coupled together to form the annular body.

The columns in the inner row may be directional columns with a triangular shape. The triangular shape of each of the triangular columns can be an isosceles-shaped triangle. For each of the directional columns, a base of the triangular shape can be located radially outside of legs of the triangular shape.

A railway brake disc can include an annular body that circumferentially encircles a center opening. The annular body can be mounted to a railway wheel. The annular body can be engaged by a brake caliper pad to slow or stop rotation of the railway wheel. The annular body can include rows of protrusions located at different radial distances from a radial center of the annular body. The protrusions of the annular body can include an outer row of circular pillars located along an outer radial distance of the annular body, an inner row of inner columns located along an inner radial distance of the annular body, and at least one intermediate row of intermediate columns radially located between the inner row of the inner columns and the outer row of the circular pillars.

The annular body can be a unitary body. The annular body can be formed from two or more arcuate segments coupled with each other.
The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.
The disc brake of the present invention comprises a disc, the cooling surface of which is shaped to ensure an adequate heat exchange surface, an efficient flow of cooling air and a reduced loss of power due to air resistance. Therefore, the shape of the disc according to the present invention ensures the generation of an effective cooling flow, thus improving the overall efficiency of the vehicle. The use of the disc according to the present invention has resulted in an improvement in terms of cooling effectiveness and in terms of increased vehicle efficiency.
In particular, the greatest effectiveness has been experimentally found with a disk according to the present invention which comprises a plurality of internal cooling protrusions with a triangular shape with a vertex oriented towards the center of the disk; a plurality of intermediate cooling protrusions with a rhomboid shape; a plurality of external cooling protrusions with a cylindrical shape. In fact, as illustrated in figure 2 by the dotted arrow, the internal cooling protrusions with a triangular shape allow for channeling of the air flow, thus improving the cooling effectiveness in an efficient manner; while the intermediate cooling protrusions allow both efficient channeling of the air flow and an increase in the heat exchange surface, thus improving the cooling effectiveness; finally, the external cooling protrusions with a cylindrical shape allow for the evacuation of the cooling air from the disk, thus ensuring an efficient heat exchange surface.
Furthermore, the plurality of external cooling protrusions according to the present invention allows, thanks to the choice of their geometric characteristics, to be able to act effectively on the resonance frequencies of the disc, thus reducing the vibrations of the disc in a simplified manner.
Finally, the inventors have experimentally found that the external cooling protrusions of cylindrical shape and having the same height as the other cooling protrusions (internal and intermediate cooling protrusions) reduce the vibration of the disc brake to a greater extent than the external cooling protrusions of non-cylindrical shape or of a height different from that of the other protrusions.

## Claims

1. Railway disc brake (100), comprising a disc (100a) adapted to be connected to a wheel and to be engaged by a brake caliper pad to slow down or stop the rotation of the railway wheel; said disc comprising a plurality of cooling protrusions (208, 212, 214) arranged along a plurality of concentric circumferential rows (200, 202, 204, 206) with respect to a centre (108) of said disc (100a); said railway disc brake being **characterised in that** said disc comprises
- a plurality of external cooling protrusions (208) identical to each other and arranged along an external circumferential line (206); each of said external cooling protrusions (208) having a cylindrical shape;
- a plurality of internal cooling protrusions (212) identical to each other and arranged along an internal circumferential line (200); each of said internal cooling protrusions (212) having a triangular shape, one of whose vertices is oriented towards the centre (108) of said disk (100a);
- a plurality of intermediate cooling protrusions (214) equal to each other and arranged along one or more intermediate circumferential lines (202, 204) positioned between said external circumferential line (206) and said internal circumferential line (200); each of said intermediate cooling protrusions (214) having a rhomboid shape.

2. A disc brake according to claim 1, **characterized in that** each of said intermediate cooling protrusions (214) is oriented with a major diagonal (214a) along a radius (R) of said disc (100a).

3. A disc brake according to claim 2, **characterized in that** said intermediate cooling protrusions (214) are arranged along an external intermediate circumferential line (204) and along an internal intermediate circumferential line (202).

4. A disc brake according to claim 3, **characterized in that** each of said intermediate cooling protrusions (214) arranged along said external intermediate circumferential line (204) is positioned with the major diagonal (214a) arranged along a radius (R) of said disc (100a) that passes through a respective internal cooling protrusion (212) and passes between two external cooling protrusions (208).

5. Disc brake according to claim 3 or 4, **characterized in that** each of said intermediate cooling protrusions (214) arranged along said internal intermediate circumferential line (202) is positioned with the major diagonal (214a) arranged along a radius (R) of said disc (100a) which passes through a respective external cooling protrusion (208) and passes between two internal cooling protrusions (212).

6. Disc brake according to one of the preceding claims, **characterized in that** said internal cooling protrusions (212) and said intermediate cooling protrusions (214) all have the same height.

7. Disc brake according to one of the preceding claims, **characterized in that** said external cooling protrusions (208), said internal cooling protrusions (212) and said intermediate cooling protrusions (214) all have the same height.
